(19) Europäisches Patentamt
European Patent Office
Office européen des brevets

(11) **EP 3 778 529 A1**

(12) **EUROPEAN PATENT APPLICATION**

(43) Date of publication:
**17.02.2021 Bulletin 2021/07**

(51) Int Cl.:
**C04B 35/468** (2006.01)   **C03C 1/00** (2006.01)
**H01C 7/02** (2006.01)   **C04B 35/645** (2006.01)

(21) Application number: **20159301.9**

(22) Date of filing: **25.02.2020**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **16.08.2019 TW 108129217**

(71) Applicant: **Thinking Electronic Industrial Co., Ltd.
Kaohsiung City (TW)**

(72) Inventor: **SUN, CHIA-TSUNG
Kaohsiung City, (TW)**

(74) Representative: **Tiburzi, Andrea et al
Barzanò & Zanardo Roma S.p.A.
Via Piemonte 26
00187 Roma (IT)**

(54) **CERAMIC COMPOSITION, CERAMIC SINTERED BODY, LAMINATED CERAMIC ELECTRONIC COMPONENT AND METHOD FOR MANUFACTURING THE SAME**

(57) This invention provides a ceramic composition, a ceramic sintered body, a laminated ceramic electronic component and a method for manufacturing the same. By adjusting the amount of the micro/nano silicate glass of the ceramic composition, the ceramic sintered body has a glass phase after sintering the ceramic composition, and has an appropriate porosity so as to provide pathways to supply sufficient oxygen. Therefore, the laminated ceramic electronic component comprising the ceramic sintered body has excellent properties of low room temperature resistance value and high temperature coefficient of resistance.

FIG.1

**Description**

1. Field of the Invention

The present invention relates to a ceramic composition containing barium titanate, a ceramic sintered body obtained by sintering said ceramic composition, and a laminated ceramic electronic component comprising said ceramic sintered body and a manufacturing method thereof. In particular, the present invention relates to a laminated ceramic electronic component for a positive temperature coefficient thermistor.

2. Description of Related Art

Thermistors are variable resistors that change their resistance with temperature and could be categorized into a positive temperature coefficient thermistor, a negative temperature coefficient thermistor and a critical temperature resistor. As thermistors achieve high precision within a specific temperature range, they currently have extensive applications and may serve as temperature sensors, inrush current limiters or self-resetting overcurrent protectors.

A resistance value of the positive temperature coefficient thermistor (referred to as PTC thermistors) will increase as the temperature of the PTC thermistors per se increases. Further, when the temperature of the PTC thermistors reaches the Curie temperature (referred to as Tc) or the magnetic transition point, the resistance value thereof increases steeply within a very limited temperature range, and such phenomenon is known as the PTC effect. Therefore, the PTC thermistors could serve as a heater and a thermal switch so as to achieve three functions simultaneously: sensing, heating and switching.

Since appliances such as home appliances or consumer electronics which are used at room temperature usually incorporate thermistors such as temperature sensors, thermistors with low resistance at room temperature can be applied widely. However, even the PTC thermistors have the excellent functions aforementioned, due to the limitation of the current development of the manufacturing technology, the PTC thermistors with both low resistance at room temperature and excellent temperature coefficient of resistance are still to be developed to meet the need of the market.

The present invention provides a ceramic composition that can be applied to a thermistor to reduce the room temperature resistance value of the thermistor and to increase the temperature coefficient of resistance of the thermistor.

To achieve the object aforementioned, the present invention provides a ceramic composition comprising: a primary material including barium titanate ($BaTiO_3$) powder, a first rare-earth element material, and a micro/nano silicate glass including silicon dioxide; wherein the micro/nano silicate glass is in an amount from 3 weight percent (wt%) to 20 wt% based on a total amount of the primary material, the first rare-earth element material and the micro/nano silicate glass.

For example, the micro/nano silicate glass may be in an amount of 3 wt%, 4 wt%, 5 wt%, 6 wt%, 7 wt%, 8 wt%, 9 wt%, 10 wt%, 11 wt%, 12 wt%, 13 wt%, 14 wt%, 15 wt%, 16 wt%, 17 wt%, 18 wt% or 19 wt%.

Preferably, based on the total amount of the primary material, the first rare-earth element material and the micro/nano silicate glass, the primary material is in an amount from 77 wt% to 96.9 wt%; more preferably, the primary material is in an amount from 79 wt% to 92.9 wt%.

Preferably, based on the total amount of the primary material, the first rare-earth element material and the micro/nano silicate glass, the first rare-earth element material is in an amount from 0.1 wt% to 3 wt%. For example, the first rare-earth element material may be in an amount of 0.2 wt%, 0.3 wt%, 0.4 wt%, 0.5 wt%, 0.6 wt%, 0.7 wt%, 0.8 wt%, 0.9 wt%, 1.0 wt%, 1.5 wt%, 2 wt% or 2.5 wt%.

Preferably, the primary material further includes a first element, and the first element is one selected from strontium (Sr), calcium (Ca) and any combination thereof.

Preferably, besides the $BaTiO_3$ powder, the primary material may further contain titanium dioxide ($TiO_2$) powder, strontium titanate ($SrTiO_3$) powder, calcium titanate ($CaTiO_3$) powder or any combination thereof, but is not limited thereto. When the primary material contains the elements of barium, strontium, calcium or titanium, the lattice constant of the cubic perovskite-type structure of the primary material can be adjusted, so that ceramic sintered bodies with various Curie temperatures could be obtained after sintering said ceramic composition.

Preferably, the first rare-earth element material includes yttrium (Y), samarium (Sm), niobium (Nb), neodymium (Nd), cerium (Ce), an alloy thereof or an oxide thereof.

According to the present invention, the cubic perovskite-type structure of the primary material could be semiconductorized by adding the first rare-earth element material so as to reduce the resistance value of the ceramic sintered body.

As both the primary material and the first rare-earth element material are in a solid state, a specific amount of the micro/nano silicate glass in the ceramic composition is conducive to all the elements dispersing homogeneously in the ceramic sintered body after sintering. During the sintering process of the ceramic composition, the micro/nano silicate glass could quickly and homogeneously wet the surface of barium titanate powders (primary material), so that each element in the ceramic composition can be uniformly diffused into the lattice of the cubic perovskite-type structure of the primary material to enhance the dielectric properties of the ceramic sintered body.

Preferably, the micro/nano silicate glass further comprises a second rare-earth element material and/or a second element. The second rare-earth element material and/or the second element are co-sintered with the silicon dioxide to form the micro/nano silicate glass. Preferably, the second rare-earth element material is one selected from yttrium, samarium, niobium, neodymium, cerium and any combination thereof, and the second element includes barium, strontium, calcium, titanium or any combination thereof.

More preferably, based on the total amount of the micro/nano silicate glass, the silicon dioxide is in an amount from 97.3 wt% to 99.4 wt%; the second rare-earth element material is in an amount from 0.1 wt% to 0.7 wt%; and/or the second element is in an amount from 0.5 wt% to 2 wt%. In some embodiments, the second rare-earth element material is in an amount of 0.2 wt%, 0.3 wt%, 0.4 wt%, 0.5 wt% or 0.6 wt%; and the second element is in an amount of 0.6 wt%, 0.7 wt%, 0.8 wt%, 0.9 wt%, 1.0 wt%, 1.1 wt%, 1.2 wt%, 1.3 wt%, 1.4 wt%, 1.5 wt%, 1.6 wt%, 1.7 wt%, 1.8 wt% or 1.9 wt%.

Preferably, the primary material has an average particle size ranging from 0.2 $\mu$m to 3 $\mu$m.

Preferably, the micro/nano silicate glass has an average particle size ranging from 30 nm to 3 $\mu$m.

In the present invention, the temperature required for the micro/nano silicate glass to liquefy is relatively low, so that each element in the ceramic composition could be homogenously dispersed and uniformly diffused into the lattice of the cubic perovskite-type structure of the primary material.

The present invention further provides a ceramic sintered body, which is obtained by sintering the ceramic composition. The ceramic sintered body has multiple pores, and a glass phase is formed in some of the pores.

According to the present invention, each of the pores of the ceramic sintered body is a space formed at the junction among the surfaces of at least three adjacent crystallites.

According to the present invention, during the sintering and densification of the ceramic composition, the micro/nano silicate glass is liquefied and facilitates each element in the ceramic composition, such as barium, strontium, calcium, titanium, yttrium, samarium, niobium, neodymium, cerium etc., to enter the cubic perovskite structure of the primary material. After completion of the sintering, the silicon dioxide from the micro/nano silicate glass will aggregate in the pores of the ceramic sintered body to form solid particles, which are identified as the glass phase. Such glass phase could also be referred to as a solid glass phase or a glass grain, which facilitates reduction of the resistance value and promotes the electrical characteristics of the laminated ceramic electronic component as well.

According to the present invention, when the micro/nano silicate glass in the ceramic composition is in an amount less than 3 weight percent, the amount of silicon is insufficient to form an identifiable glass phase in the following obtained ceramic sintered body, and such a lack of glass phase further results in a poor electrical performance. Besides, when the micro/nano silicate glass in the ceramic composition is in an amount over 20 weight percent, the sintering effect will be too strong to form a porous structure in the ceramic sintered body, resulting in poor dielectric performance of the ceramic sintered body as well.

According to the present invention, the porosity of the ceramic sintered body is calculated according to the cross section randomly selected from the ceramic sintered body by a scanning electron microscope. The porosity is represented by the following formula:

$$porosity\ (\%)=VH/VT*100;$$

wherein VH is a total area of all pores in said cross section, and VT is a total area of said cross section.

In the step of oxidation treatment during the sintering process, the ceramic sintered body has multiple pores which serve as pathways to supply oxygen, so the oxygen supplementation efficiency is appropriately enhanced to further improve the temperature coefficient of resistance (*i.e.* $\alpha$ value) of the ceramic sintered body.

If a density of the ceramic sintered body is too high, it means that the pathways to supply oxygen are reduced. Therefore, the $\alpha$ value of the ceramic sintered body will be poor due to the reduced oxygen supply capacity. Besides, if the porosity of the ceramic sintered body is too high, although there will be more pathways to supply oxygen and the $\alpha$ value is raised, the structural strength of the ceramic sintered body will be poor, which leads to a failure of the dielectric performance test due to the insufficient density and structural strength of the ceramic sintered body. Therefore, the porosity of the ceramic sintered body is preferably 5% to 20%. For example, the porosity could be 6%, 7%, 8%, 9%, 10%, 11%, 12%, 13%, 14%, 15%, 16%, 17%, 18%, 19% or 20 %.

The present invention also provides a laminated ceramic electronic component which comprises a ceramic main body comprising multiple ceramic sintered bodies aforementioned and multiple internal electrodes; wherein the ceramic sintered bodies and the internal electrodes are stacked up on each other to form the ceramic main body; and two external electrodes, which are respectively disposed on opposite sides of the ceramic main body and are electrically connected to the internal electrodes.

According to the present invention, two adjacent internal electrodes are respectively electrically connected to the opposite external electrodes.

The internal electrodes are stacked up on one another and are electrically connected in parallel inside the laminated ceramic electronic component, thereby achieving the efficacy to lower the room temperature resistance value.

Preferably, the internal electrodes include nickel (Ni).

Preferably, each of the external electrodes includes silver (Ag), nickel, tin (Sn) or any combination thereof. In some embodiments, each of the external electrodes has a laminated structure. For example, each of the external electrodes may be an electrode with a three-layer structure, and the materials of the first layer to the third layer are silver, nickel and tin in sequence.

Preferably, the internal electrodes and the external electrodes are approximately perpendicular to each other (at an angle of 90 degrees relative to each other).

Preferably, the laminated ceramic electronic component further includes two protective layers. The protective layers are disposed on opposite surfaces of the ceramic main body, and the opposite surfaces and the internal electrodes are parallel to each other. The protective layer could avoid overplating during the electroplating process to form an external electrode of the laminated ceramic electronic component.

Preferably, a room temperature resistance value of the laminated ceramic electronic component ranges from 1 ohm to 10 ohms, and said room temperature is 25 °C.

Preferably, the temperature coefficient of resistance ($\alpha$ value) of the laminated ceramic electronic component ranges from 4 ppm/°C to 10 ppm/°C.

The present invention further provides an electrical appliance including the ceramic composition, the ceramic sintered body or the laminated ceramic electronic component.

The present invention further provides a method for manufacturing a laminated ceramic electronic component, which includes the following steps: Step a: mixing the ceramic composition aforementioned and a solvent to form a ceramic slurry; Step b: casting the ceramic slurry into multiple tapes; Step c: providing each of the tapes with an internal electrode to obtain multiple sheets; Step d: stacking up the multiple sheets one by one to form a laminated structure; Step e: sintering the laminated structure in a reducing atmosphere to form a ceramic main body; wherein the ceramic main body includes multiple ceramic sintered bodies obtained by sintering the multiple sheets, and the ceramic sintered body and the internal electrode are stacked up on each other; and Step f: disposing two external electrodes on opposite sides of the ceramic main body respectively to form the laminated ceramic electronic component; wherein the external electrodes and the internal electrodes are electrically connected.

Each of the sheets aforementioned contains an internal electrode.

In some embodiments, the ceramic slurry may further include a dispersant and/or a binder, but is not limited thereto. For example, the dispersant may be an anionic dispersant, a cationic dispersant, a polymeric dispersant or any combination thereof; the binder may be polyvinyl butyral resin (PVB), cellulosic resin, acrylic resin, vinyl acetate resin, polyvinyl alcohol resin or any combination thereof.

Preferably, Step e includes: Step e1: sintering the laminated structure in the reducing atmosphere for 0.5 hour to 4 hours at a sintering temperature ranging from 1000°C to 1500°C, for example, 1050°C, 1100°C, 1150°C, 1200°C, 1250°C, 1300°C, 1350°C, 1400°C or 1450°C; and Step e2: oxidizing the laminated structure in an atmospheric environment at a temperature ranging from 660°C to 940°C, for example, 700°C, 750°C, 800°C, 850°C or 900°C.

More preferably, the sintering temperature in Step e1 ranges from 1250°C to 1380°C.

More preferably, the sintering time in Step e1 ranges from 1 hour to 1.5 hours.

Preferably, the temperature in Step e2 ranges from 700°C to 900°C, and the oxidation processing time is from 0.5 hour to 4 hours. Preferably, the oxidation processing time in Step e2 ranges from 1 hour to 1.5 hours. By performing the oxidation process at the temperature aforementioned in Step e2, the laminated ceramic electronic component could have a higher $\alpha$ value.

Preferably, the reducing atmosphere includes nitrogen and hydrogen; more preferably, a partial pressure of oxygen of the reducing atmosphere is 100 ppm or less.

Preferably, the laminated structure may undergo a degreased step in a protective atmosphere to remove organic additives such as solvents contained in the ceramic slurry before Step e, and a temperature of the degreased step ranges from 250°C to 350°C, for example, 275°C, 300°C or 325°C, and/or a degreasing time of the degreased step is from 16 hours to 32 hours, for example, 20 hours, 24 hours, 28 hours or 30 hours.

Preferably, the protective atmosphere includes nitrogen and hydrogen.

Preferably, the thickness of the sheets is from 10 $\mu$m to 40 $\mu$m, for example, 15 $\mu$m, 20 $\mu$m, 25 $\mu$m, 30 $\mu$m or 35 $\mu$m.

Preferably, the laminated structure aforementioned may be subjected to an edge-corner grinding between Step e1 and Step e2.

Preferably, the laminated ceramic electronic component is a laminated semiconductor ceramic electronic component.

From above, the ceramic composition of the present invention obtained by means of adding a specific amount of the micro/nano silicate glass has the advantages as follows: (1) the micro/nano silicate glass serves as a sintering aid and promotes a homogenous distribution of the elements in the ceramic composition during sintering; (2) a certain amount of glass phase and the porous structure formed in the obtained ceramic sintered body improve the electrical performance and lower the resistance value of the laminated ceramic electronic components; and (3) the proper porosity of the ceramic sintered body brings proper oxygen supplement efficiency and further improves the temperature coefficient of resistance of the laminated ceramic electronic component.

IN THE DRAWINGS:

Fig.1 demonstrates a cross-sectional view of the laminated ceramic electronic component according to the present invention.
Figs. 2A to 2H are cross-sectional photographs of the ceramic sintered bodies of the laminated ceramic electronic component of Comparative Example 1, Examples 1 to 5, and Comparative Examples 2 and 3 taken by an electron microscope respectively.

The embodiments of the present invention will be described in detail. People skilled in the art can easily understand the advantages and effects of the present invention through the disclosure of the present specification.

Preparation Example 1: the laminated ceramic electronic component

The formula of the starting materials for the ceramic composition is shown in Table 1. Further, toluene and ethanol serve as solvents, and their amount could be adjusted according to the desired degree of dispersion of the starting materials. Further, the polymer-based dispersant with the trade name BYK-110, 111 and/or 115 is added in an approximate amount ranging from 0.5 wt% to 0.75 wt% based on a total weight of the starting materials. Polyvinyl butyral resin serves as a binder and is added in an approximate amount ranging from 25 wt% to 30 wt% based on the total weight of the starting materials. All the materials aforementioned are loaded into a ball mill together with the zirconium balls and are thoroughly mixed by wet grinding to obtain a ceramic slurry. The ceramic slurry is cast into tapes by doctor blading and then dried at the temperature ranging approximately from 50°C to 60°C to obtain a roll of sheet; wherein the drying time could be adjusted according to the actual conditions.

Table 1 : The formula of the ceramic composition

| Group No. | Primary material (wt%) | First rare-earth element material (wt%) | Micro/nano silicate glass (wt%) |
|---|---|---|---|
| E1 | 96.5 | 0.5 | 3 |
| E2 | 94.5 | 0.5 | 5 |
| E3 | 89.5 | 0.5 | 10 |
| E4 | 84.5 | 0.5 | 15 |
| E5 | 79.5 | 0.5 | 20 |
| CE1 | 99.5 | 0.5 | 0 |
| CE2 | 78.5 | 0.5 | 21 |
| CE3 | 74.5 | 0.5 | 25 |

The primary material is barium titanate powder with a purity of 99.5% and is purchased from Nippon Chemical Industrial Co. Ltd.
The first rare-earth element material is niobium oxide with a purity of 99.9% and is purchased from UNIGUE Enterprise Co., Ltd.
The micro/nano silicate glass is purchased from Exopack and includes silicon dioxide in an amount of 98.6 wt%, a rare-earth element in an amount of 0.4 wt% and at least one element which is selected from the group consisting of barium, strontium, calcium, and titanium and is in an amount of 1 wt%.
The primary material has an average particle size ranging from 0.2 $\mu$m to 3 $\mu$m, and the micro/nano silicate glass has an average particle size ranging from 30 nm to 3 $\mu$m.
The metallic nickel powder and the organic binder are dispersed in the organic solvent to prepare an internal electrode paste, and then the internal electrode paste is screen-printed on the tape to form a sheet with the internal electrode which are stacked up to form a laminated structure. Some sheets without internal electrodes are also prepared and serve as an upper cover and a lower cover, and the laminated structure is placed between the upper and lower covers and then subjected to hot isostatic pressing (HIP) altogether. Using a cutter to obtain the ceramic green body with a laminated structure, said ceramic green body is then subjected to a degreasing treatment at a temperature of about 300°C for 24 hours under a protective atmosphere. The degreased ceramic green body is calcined in a reducing atmosphere of nitrogen-hydrogen at a temperature ranging from 1250°C to 1380°C for about 1 hour to obtain a sintered ceramic main body comprising said multiple ceramic sintered bodies and said multiple internal electrodes stacked up on each other. The numbers of both the ceramic sintered bodies and the internal electrodes could be adjusted according to the thickness of the sheets. The sintered ceramic main body is subjected to edge-corner grinding, and then an oxidation process is carried out at a temperature ranging from 700°C to 900°C in an atmospheric environment to form a ceramic main body. The protective layers are respectively coated on the upper and lower surfaces of the ceramic main body and are parallel to the internal electrodes. The left and right sides of the ceramic main body are stained with silver to form external electrodes, and the external electrodes are electrically connected to the internal electrodes.

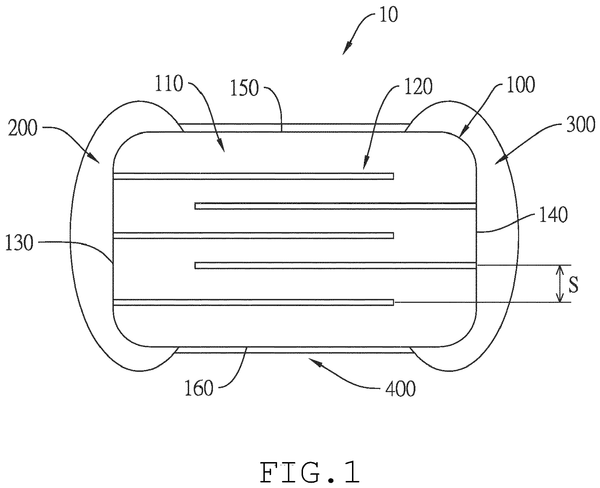

As shown in Fig. 1, the laminated semiconductor ceramic electronic component 10 has a ceramic main body 100 comprising multiple ceramic sintered bodies 110 and multiple internal electrodes 120. The ceramic sintered bodies 110 and the internal electrodes 120 are stacked up on each other to form the ceramic main body 100; two external electrodes 200, 300 are respectively disposed on opposite sides 130, 140 of the ceramic main body 100, and are electrically connected to the internal electrodes 120. The angle between the external electrode 200, 300 and the internal electrode 120 is approximately 90 degrees; and two protective layers 400 are respectively disposed on the upper and lower surfaces 150, 160 of the ceramic main body, and are parallel to the internal electrodes 120. Besides, two adjacent internal electrodes 120 are separated by the ceramic sintered body 110, and a thickness S between the two adjacent internal electrodes 120 is less than 40 $\mu$m.

Characteristic analysis:

The microstructures of the cross sections of the ceramic sintered bodies of the laminated ceramic electronic components of Examples 1 to 5 (E1 to E5) and Comparative Examples 1 to 3 (CE1 to CE3) are observed by an electron microscope and the porosities thereof are calculated. The results are shown in Table 2.

Measurements of the room temperature resistance values and the $\alpha$ values of the laminated ceramic electronic components of Examples 1 to 5 and Comparative Examples 1 to 3 are carried out on the sample stained with silver as external electrodes according to the steps aforementioned, and the sample has a length of 0.933 mm and a cross-sectional area of 2.396 mm$^2$. The results are shown in Table 2.

The room temperature resistance value is measured by applying a voltage to the sample aforementioned at 25°C, and then its current value was measured by a multimeter (brand: HIOKI, product model: RM3545) to calculate the resistance value.

The measuring method for $\alpha$ value is as follows: place the sample in a thermostatic bath, gradually increase the temperature from 20°C to 250°C, and then calculate the resistance values corresponding to different temperatures respectively according to the measurement steps aforementioned. The resistance-temperature curve is obtained, and the temperature at which the resistance value is twice the room temperature (25°C) is identified as the resistance double point. Since the resistance double point is the phase transition temperature at which the sample begins to exhibit PTC characteristics and is approximately close to the Curie Point, the room temperature is identified as T1, the resistance double point is identified as T2, and their corresponding resistance values are respectively identified as R1 and R2. Finally, the $\alpha$ value is obtained according to the formula:

$$\alpha = \{\ln 10 \times (\log R2 - \log R1)/(T2 - T1) \times 100).$$

Table 2: Test results of the laminated ceramic electronic components

| Group No. | Micro/nano silicate glass (wt%) | Porosity (%) | Room temperature resistance value (ohm) | $\alpha$ value (ppm/°C) | Microstructure |
|---|---|---|---|---|---|
| E1 | 3 | 20 | 9.61 | 5.96 | Shown in Fig. 2B |
| E2 | 5 | 16 | 7.87 | 5.7 | Shown in Fig. 2C |
| E3 | 10 | 10 | 5.22 | 5.6 | Shown in Fig. 2D |
| E4 | 15 | 7 | 3.92 | 5.36 | Shown in Fig. 2E |

(continued)

| Group No. | Micro/nano silicate glass (wt%) | Porosity (%) | Room temperature resistance value (ohm) | $\alpha$ value (ppm/°C) | Microstructure |
|---|---|---|---|---|---|
| E5 | 20 | 5 | 2.79 | 4.01 | Shown in Fig. 2F |
| CE1 | 0 | 40 | 13.55 | 2.73 | Shown in Fig. 2A |
| CE2 | 21 | 3 | 2.02 | 3.7 | Shown in Fig. 2G |
| CE3 | 25 | 1 | 1.06 | 1.05 | Shown in Fig. 2H |

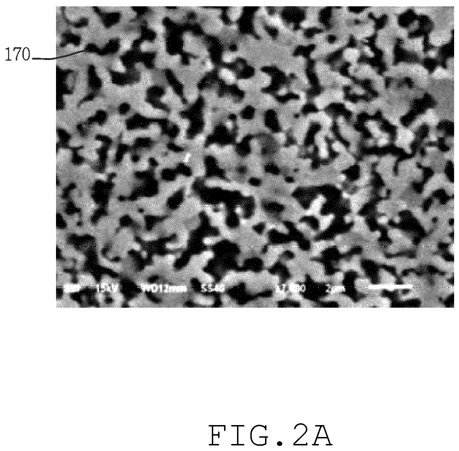

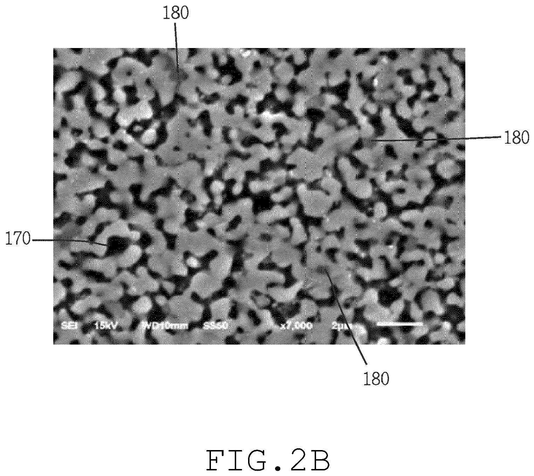

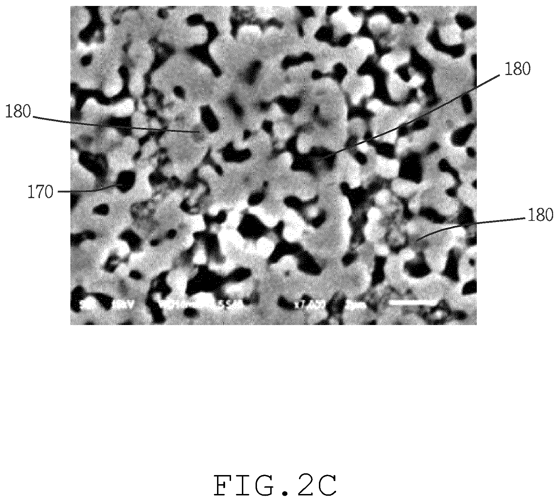

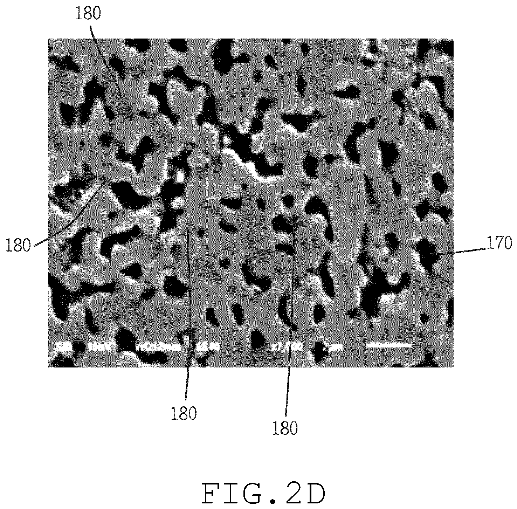

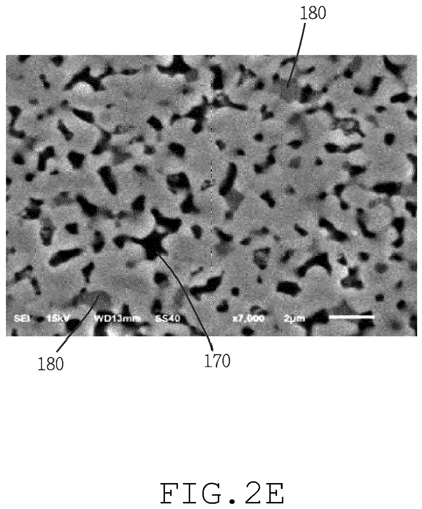

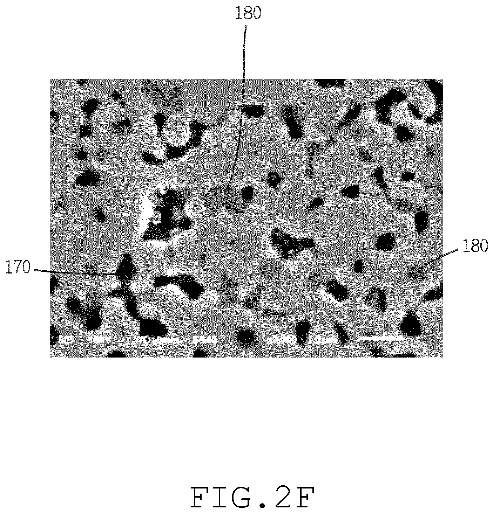

First, pores 170 could be identified in Figs. 2A to 2H in the cross section of the ceramic sintered body. Further, as the ceramic compositions adopted in E1 to E5 and CE2 and CE3 all have the micro/nano silicate glass in an amount of at least 3 weight percent, a glass phase 180 can be easily identified in some pores 170 in each of Figs. 2B to 2H.

Second, as shown in Fig. 2A, because there is no addition of the micro/nano silicate glass in the CE 1, the cross section of the ceramic sintered body obviously has more pores 170 and its porosity is up to 40%. As the structure of the ceramic sintered body is relatively loose, the room temperature resistance value of the laminated ceramic electronic component in CE1 is relatively high and is over 10 ohms. Besides, although the ceramic sintered body in CE1 has high porosity and high oxygen supplement efficiency, the $\alpha$ value of the laminated ceramic electronic component is still low and is less than 4 ppm/°C due to lack of the glass phase.

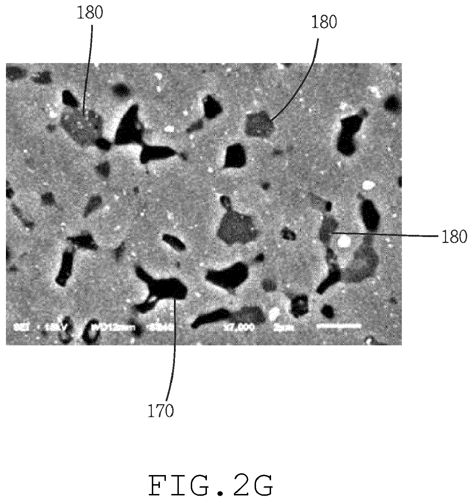

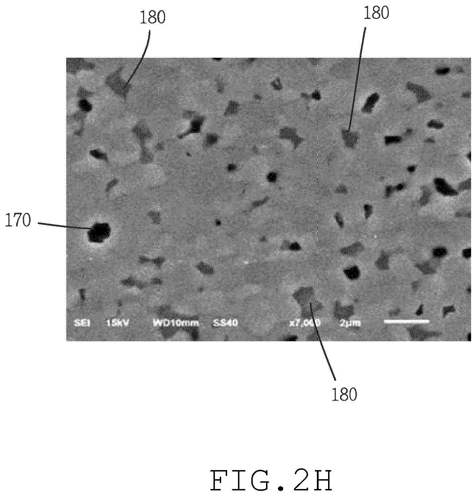

As shown in Figs. 2G and 2H, because the addition of the micro/nano silicate glass is in an amount of over 20 weight percent in each of CE2 and CE3, the porosity of each ceramic sintered body is less than 5% and the structure thereof is significantly denser. Hence, the pathways to supply oxygen are reduced and the $\alpha$ value of the laminated ceramic electronic component in each of CE2 and CE3 is low and less than 4 ppm/°C.

In contrast, since the addition of the micro/nano silicate glass of the ceramic composition is in an amount from 3 wt% to 20 wt%, the ceramic sintered body in each of E1 to E5 not only has a glass phase but also has sufficient pathways to supply oxygen. Hence, the laminated ceramic electronic component in each of E1 to E5 has a room temperature resistance value less than 10 ohms and an $\alpha$ value higher than 4 ppm/°C. In particular, when the addition of the micro/nano silicate glass is in an amount from 10 wt% to 15 wt%, the laminated ceramic electronic component has a room temperature resistance value less than 6 ohms and an $\alpha$ value higher than 5 ppm/°C.

From above, by adjusting the amount of the micro/nano silicate within a specific range in the ceramic composition of the present invention, the obtained ceramic sintered body has proper porosity and oxygen supplementation efficiency, so that the laminated ceramic electronic component containing the same has a low room temperature resistance value and a high $\alpha$ value to achieve a better electrical performance.

**Claims**

1. A ceramic composition, **characterized in that** the ceramic composition comprises:

   a primary material including barium titanate ($BaTiO_3$) powder;
   a first rare-earth element material; and
   a micro/nano silicate glass including silicon dioxide; wherein the micro/nano silicate glass is in an amount from 3 weight percent to 20 weight percent based on a total amount of the primary material, the first rare-earth element material and the micro/nano silicate glass.

2. The ceramic composition as claimed in claim 1, **characterized in that** the primary material is in an amount from 77 weight percent to 96.9 weight percent and the first rare-earth element material is in an amount from 0.1 weight percent to 3 weight percent based on the total amount of the primary material, the first rare-earth element material and the micro/nano silicate glass.

3. The ceramic composition as claimed in claim 1 or 2, **characterized in that** the primary material further includes a first element, and the first element is one selected from strontium, calcium and any combination thereof.

4. The ceramic composition as claimed in any one of claims 1 to 3, **characterized in that** the first rare-earth element material comprises yttrium, samarium, niobium, neodymium, cerium, an alloy thereof or an oxide thereof.

5. The ceramic composition as claimed in any one of claims 1 to 4, **characterized in that** the micro/nano silicate glass further comprises a second rare-earth element material and a second element, and the second rare-earth element material is one selected from yttrium, samarium, niobium, neodymium, cerium and any combination thereof; and the second element comprises barium, strontium, calcium, titanium or any combination thereof.

6. The ceramic composition as claimed in claim 5, **characterized in that** the silicon dioxide is in an amount from 97.3 to 99.4 weight percent, the second rare-earth element material is in an amount from 0.1 to 0.7 weight percent, and the second element is in an amount from 0.5 weight percent to 2 weight percent based on the total amount of the micro/nano silicate glass.

7. The ceramic composition as claimed in any one of claims 1 to 6, **characterized in that** the primary material has an average particle size ranging from 0.2 $\mu$m to 3 $\mu$m, and the micro/nano silicate glass has an average particle size ranging from 30 nm to 3$\mu$m.

8. A ceramic sintered body (110), **characterized in that** the ceramic sintered body (110) is obtained by sintering the ceramic composition as claimed in any one of claims 1 to 7, wherein the ceramic sintered body (110) has multiple pores (170), and a glass phase (180) is formed in some of the pores (170).

9. The ceramic sintered body (110) as claimed in claim 8, **characterized in that** the ceramic sintered body (110) has a porosity from 5% to 20%.

10. A laminated ceramic electronic component (10), **characterized in that** the laminated ceramic electronic component (10) comprises:

    a ceramic main body (100) comprising multiple ceramic sintered bodies (110) as claimed in claim 8 or 9 and multiple internal electrodes (120); wherein the ceramic sintered bodies (110) and the internal electrodes (120) are stacked up on each other to form the ceramic main body (100); and
    two external electrodes (200, 300), which are respectively disposed on opposite sides (130, 140) of the ceramic main body (100) and are electrically connected to the internal electrodes (120).

11. The laminated ceramic electronic component (10) as claimed in claim 10, **characterized in that** the laminated ceramic electronic component (10) further includes two protective layers (400), which are disposed on opposite surfaces (150, 160) of the ceramic main body (100), and the opposite surfaces (150, 160) and the internal electrodes (120) are parallel to each other.

12. The laminated ceramic electronic component (10) as claimed in claim 10 or 11, **characterized in that** the laminated ceramic electronic component (10) has a room temperature resistance value ranging from 1 ohm to 10 ohms, and the laminated ceramic electronic component (10) has a temperature coefficient of resistance ranging from 4 ppm/°C to 10 ppm/°C.

13. A method for manufacturing a laminated ceramic electronic component (10), **characterized in that** said method includes the following steps:

    Step a: mixing the ceramic composition as claimed in any one of claims 1 to 7 and a solvent to form a ceramic slurry;
    Step b: casting the ceramic slurry into multiple tapes;
    Step c: providing each of the tapes with an internal electrode (120) to obtain multiple sheets;
    Step d: stacking up the multiple sheets one by one to form a laminated structure;
    Step e: sintering the laminated structure in a reducing atmosphere to form a ceramic main body (100); wherein the ceramic main body (100) includes multiple ceramic sintered bodies (110) obtained by sintering the multiple sheets, and the ceramic sintered body (110) and the internal electrode (120) are stacked up on each other; and
    Step f: disposing two external electrodes (200, 300) on opposite sides (130, 140) of the ceramic main body (100) respectively to form the laminated ceramic electronic component (10); wherein the external electrodes (200, 300) and the internal electrodes (120) are electrically connected.

14. The method for manufacturing a laminated ceramic electronic component (10) as claimed in claim 13, wherein Step e includes:

    Step e1: sintering the laminated structure in the reducing atmosphere for 0.5 hour to 4 hours at a sintering temperature ranging from 1000°C to 1500°C; and

Step e2: oxidizing the laminated structure in an atmospheric environment at a temperature ranging from 660°C to 940°C.

**15.** The method for manufacturing a laminated ceramic electronic component (10) as claimed in claim 13 or 14, wherein the sheets have a thickness ranging from 10 $\mu$m to 40 $\mu$m.

FIG.1

170 ——

# FIG.2A

FIG.2B

FIG.2C

FIG.2D

FIG.2E

FIG.2F

FIG.2G

FIG.2H

Europäisches
Patentamt

European
Patent Office

Office européen
des brevets

**EUROPEAN SEARCH REPORT**

Application Number

EP 20 15 9301

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 5 397 753 A (NISHIYAMA TOSHIKI [JP] ET AL) 14 March 1995 (1995-03-14) | 1-3,8, 10,13,15 | INV. C04B35/468 |
| A | * example & sample 19 in table 1 * | 4-7,9, 11,12,14 | C03C1/00 H01C7/02 C04B35/645 |
| X | EP 1 820 784 A1 (TDK CORP [JP]) 22 August 2007 (2007-08-22) | 1,8,10, 13 | |
| A | * examples - sample 25 in table 2 * | 2-7,9, 11,12, 14,15 | |
| X | EP 0 992 469 A2 (MURATA MANUFACTURING CO [JP]) 12 April 2000 (2000-04-12) * para.[0040]; samples 9, 14, 15, 102, 104, 107, 202, 207, 304, 405 * | 1,8,10, 13 | |
| X | US 2012/270720 A1 (TANABE SHINJI [JP]) 25 October 2012 (2012-10-25) * compositions in tables 14 & 15 with reference to tables 1, 4 & 5 * | 1,8 | |
| X | EP 1 095 917 A1 (MATSUSHITA ELECTRIC IND CO LTD [JP]) 2 May 2001 (2001-05-02) * table 3: examples 33, 36 & 37 * | 1-3,8, 10,13,15 | **TECHNICAL FIELDS SEARCHED (IPC)** C04B C03C |
| X | US 2004/138050 A1 (WANG XIAOHUI [CN] ET AL) 15 July 2004 (2004-07-15) * claims; example 3 * | 1-4,8, 10,13 | H01G H01C |
| X | US 2007/078049 A1 (NONAKA TOMOAKI [JP] ET AL) 5 April 2007 (2007-04-05) * sample 18 in Table 2 * | 1,2,4,8, 10,13,15 | |
| X | GB 2 376 207 A (KYOCERA CORP [JP]) 11 December 2002 (2002-12-11) * examples in table 3 with 3 parts by weight or 5 parts by weight glass & p. 37, l.20-25 * | 1,4,8, 10,13 | |

-/--

The present search report has been drawn up for all claims

| Place of search | Date of completion of the search | Examiner |
|---|---|---|
| Munich | 3 September 2020 | Munro, Brian |

EPO FORM 1503 03.82 (P04C01)

page 1 of 2

Europäisches
Patentamt

European
Patent Office

Office européen
des brevets

## EUROPEAN SEARCH REPORT

Application Number

EP 20 15 9301

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2002/058580 A1 (MAHER GALEB H [US] ET AL) 16 May 2002 (2002-05-16)<br>* claims *<br>----- | 1,8 | |
| X | US 7 307 828 B2 (TDK CORP [JP])<br>11 December 2007 (2007-12-11)<br>* example 4, table 4 *<br>----- | 1,8,10,13 | |

TECHNICAL FIELDS
SEARCHED      (IPC)

The present search report has been drawn up for all claims

| Place of search | Date of completion of the search | Examiner |
|---|---|---|
| Munich | 3 September 2020 | Munro, Brian |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

& : member of the same patent family, corresponding
document

EPO FORM 1503 03.82 (P04C01)

**ANNEX TO THE EUROPEAN SEARCH REPORT
ON EUROPEAN PATENT APPLICATION NO.**

EP 20 15 9301

This annex lists the patent family members relating to the patent documents cited in the above-mentioned European search report.
The members are as contained in the European Patent Office EDP file on
The European Patent Office is in no way liable for these particulars which are merely given for the purpose of information.

03-09-2020

| Patent document cited in search report | | Publication date | Patent family member(s) | | Publication date |
|---|---|---|---|---|---|
| US 5397753 | A | 14-03-1995 | DE | 69304034 T2 | 13-03-1997 |
| | | | EP | 0605904 A2 | 13-07-1994 |
| | | | JP | 3227859 B2 | 12-11-2001 |
| | | | JP | H06206765 A | 26-07-1994 |
| | | | SG | 50446 A1 | 20-07-1998 |
| | | | US | 5397753 A | 14-03-1995 |
| EP 1820784 | A1 | 22-08-2007 | CN | 101024572 A | 29-08-2007 |
| | | | EP | 1820784 A1 | 22-08-2007 |
| | | | JP | 4821357 B2 | 24-11-2011 |
| | | | JP | 2007217205 A | 30-08-2007 |
| | | | KR | 20070082049 A | 20-08-2007 |
| | | | TW | 200735141 A | 16-09-2007 |
| | | | US | 2007191211 A1 | 16-08-2007 |
| EP 0992469 | A2 | 12-04-2000 | CN | 1249286 A | 05-04-2000 |
| | | | DE | 69913284 T2 | 27-05-2004 |
| | | | EP | 0992469 A2 | 12-04-2000 |
| | | | JP | 3567759 B2 | 22-09-2004 |
| | | | JP | 2000103668 A | 11-04-2000 |
| | | | KR | 20000023492 A | 25-04-2000 |
| | | | SG | 87050 A1 | 19-03-2002 |
| | | | TW | 424243 B | 01-03-2001 |
| | | | US | 6346497 B1 | 12-02-2002 |
| US 2012270720 | A1 | 25-10-2012 | CN | 102656127 A | 05-09-2012 |
| | | | JP | 5657558 B2 | 21-01-2015 |
| | | | JP | WO2011046205 A1 | 07-03-2013 |
| | | | KR | 20120093915 A | 23-08-2012 |
| | | | TW | 201119974 A | 16-06-2011 |
| | | | US | 2012270720 A1 | 25-10-2012 |
| | | | WO | 2011046205 A1 | 21-04-2011 |
| EP 1095917 | A1 | 02-05-2001 | AT | 529389 T | 15-11-2011 |
| | | | CN | 1293645 A | 02-05-2001 |
| | | | CN | 1516208 A | 28-07-2004 |
| | | | EP | 1095917 A1 | 02-05-2001 |
| | | | JP | 3838036 B2 | 25-10-2006 |
| | | | KR | 20010042814 A | 25-05-2001 |
| | | | TW | 475923 B | 11-02-2002 |
| | | | US | 6344427 B1 | 05-02-2002 |
| | | | WO | 0048963 A1 | 24-08-2000 |
| US 2004138050 | A1 | 15-07-2004 | CN | 1404080 A | 19-03-2003 |
| | | | US | 2004138050 A1 | 15-07-2004 |

EPO FORM P0459

For more details about this annex : see Official Journal of the European Patent Office, No. 12/82

page 1 of 2

## ANNEX TO THE EUROPEAN SEARCH REPORT
## ON EUROPEAN PATENT APPLICATION NO.

EP 20 15 9301

This annex lists the patent family members relating to the patent documents cited in the above-mentioned European search report.
The members are as contained in the European Patent Office EDP file on
The European Patent Office is in no way liable for these particulars which are merely given for the purpose of information.

03-09-2020

| Patent document cited in search report | | Publication date | Patent family member(s) | | Publication date |
|---|---|---|---|---|---|
| US 2007078049 | A1 | 05-04-2007 | CN | 1978380 A | 13-06-2007 |
| | | | JP | 4396608 B2 | 13-01-2010 |
| | | | JP | 2007099534 A | 19-04-2007 |
| | | | KR | 20070037348 A | 04-04-2007 |
| | | | US | 2007078049 A1 | 05-04-2007 |
| GB 2376207 | A | 11-12-2002 | CN | 1423288 A | 11-06-2003 |
| | | | CN | 1949420 A | 18-04-2007 |
| | | | GB | 2376207 A | 11-12-2002 |
| | | | US | 2003016484 A1 | 23-01-2003 |
| US 2002058580 | A1 | 16-05-2002 | TW | 563141 B | 21-11-2003 |
| | | | US | 2002058580 A1 | 16-05-2002 |
| | | | WO | 03037820 A1 | 08-05-2003 |
| US 7307828 | B2 | 11-12-2007 | AT | 438191 T | 15-08-2009 |
| | | | CN | 1847194 A | 18-10-2006 |
| | | | EP | 1710817 A2 | 11-10-2006 |
| | | | JP | 4483659 B2 | 16-06-2010 |
| | | | JP | 2006282482 A | 19-10-2006 |
| | | | KR | 20060106893 A | 12-10-2006 |
| | | | TW | I290544 B | 01-12-2007 |
| | | | US | 2006232911 A1 | 19-10-2006 |

EPO FORM P0459

For more details about this annex : see Official Journal of the European Patent Office, No. 12/82